# EUROPEAN PATENT SPECIFICATION

(11) **EP 3 626 879 B1**
(45) Date of publication and mention of the grant of the patent: **18.11.2026**
(21) Application number: 19198466.5
(22) Date of filing: 19.09.2019
(51) Int. Cl.: D06N 3/00, D06M 15/70, D06M 15/233, D06M 15/256, D06M 15/263, D06M 15/333, D06M 23/08, D06M 23/16, D06N 3/04, D06P 1/22, D06P 1/52, D06P 5/20, D06P 7/00

(54) **COMPOSITION FOR COATING TEXTILE ARTICLES AND TEXTILE ARTICLES COMPRISING IT**
ZUSAMMENSETZUNG ZUR BESCHICHTUNG VON TEXTILARTIKELN UND TEXTILARTIKEL DAMIT
COMPOSITION POUR LE REVÊTEMENT D'ARTICLES TEXTILES ET ARTICLES TEXTILES LA COMPRENANT

(30) Priority: 19.09.2018 EP 18195352
(43) Date of publication of application: 25.03.2020
(73) Proprietor: Sanko Tekstil Isletmeleri San. Ve Tic. A.S., 16400 Inegol - Bursa (TR)
(72) Inventor: AGIRMAN, Ali Kemal, 16400 Inegol - BURSA (TR); KAPLAN, Gokhan, 16400 Inegol - BURSA (TR); KORKMAZ, Fatma, 16400 Inegol - BURSA (TR); AGZIKARA, Seref, 16400 Inegol - BURSA (TR); COBANOGLU, Ozgur, 16400 Inegol - BURSA (TR); ERYILMAZ, Jitka, 16400 Inegol - BURSA (TR); IYIDOGAN, Deniz, 16400 Inegol - BURSA (TR); ZENGI, Leyla, 16400 Inegol - BURSA (TR); AKBULUT, Sabrettin, 16400 Inegol - BURSA (TR); KAZANC, Semih, 16400 Inegol - BURSA (TR)
(74) Representative: Gislon, Gabriele

(56) References cited:
- WO-A1-01/00739
- WO-A1-2017/197220
- WO-A1-2018/114523
- DE-C1- 19 738 625
- US-A- 4 382 990
- US-A- 4 510 282
- US-A- 4 670 503
- US-A1- 2009 258 990
- DATABASE WPI Week 201871, Derwent World Patents Index; AN 2018-758402, XP002789568
- DATABASE WPI Week 201776, Derwent World Patents Index; AN 2017-635524, XP002789569
- DATABASE WPI Week 201716, Derwent World Patents Index; AN 2016-71230U, XP002789570
- DATABASE WPI Week 201433, Derwent World Patents Index; AN 2014-J78793, XP002795529

## Description

### Field of the invention

The present invention relates to the field of textiles, in particular to substantially colourless compositions that are suitable to impart impact abrasion resistance to textiles which are applied to.

The present invention also relates to fabrics coated with such compositions, and to garments comprising such coated fabrics.

### Background of the invention

The use of appropriate gears and equipment is essential to safely ride motorcycles and similar vehicles.

However, motorcycle gears are generally not suitable for daily use.

Textiles, e.g., fabrics, comprising high strength performance yarns (such as, for example, Dyneema^{®}, Spectra^{®}, Kevlar^{®}, etc.) are known in the production of garments and clothing that are suitable to be used as motorcycle gears.

Such textiles can be monolayer or multilayer fabrics which are produced, as above mentioned, by using high strength performance yarns. For example, high strength performance yarns interlaced with monolayer textile weaves (plain, twill etc.) or multilayer textile weaves (by layer to layer binding, angle locking, binder etc.) are known in the art.

However, known textiles generally do not have aesthetical characteristics which make the fabric or garment fashionable in the clothing industry, as well as suitable for daily use.

There are also several chemicals that are known to impart abrasion resistance and impact resistance properties to substrates which they are applied to.

US4510282 discloses an aqueous dispersion for the production of corrosion- and weather-resistant coatings on work materials, especially on synthetic fiber fabrics. The aqueous dispersion disclosed in US4510282 comprises polyvinylidene fluoride (PVDF), water, an acrylic co-polymer, a pigment, a UV-light protection agent and a solvent (e.g., a low boiling alchohol). US4510282 discloses that the aqueous dispersion can be used for the production of corrosion- and weather-resistant coatings on heavy duty fabrics to be used to make inflatable hangars, tent roofs and conveying belts. Further relevant information concerning these kind of coatings can be found in CN108547156A, CN107100011A and US2009/258990A1.

However, textile articles, suitable for the production of garments and motorcycle gears, that are resistant to impact abrasion as well as soft and stylish, cannot be obtained by using the currently known compositions.

### Summary of the invention

It is an aim of the present invention to solve the above mentioned problems and to provide a substantially colourless composition suitable to be applied to textile articles, such as fabrics or garments.

Another aim of the present invention is to provide a substantially colourless composition that can impart impact abrasion resistance to textile articles.

Still another aim of the present invention is to provide a substantially colourless composition that is suitable to be used in the production of fabrics and garments that are suitable for daily use.

A further aim of the present invention is to provide a textile article which is suitable for use in both motorcycle gears and daily use garments.

These and other aims are achieved by the aqueous paste composition according to claim 1.

A further object of the present invention is a process according to claim 10. Still further objects of the present invention are a coated fabric according to claim 14 and a garment comprising the coated fabric, according to claim 19. Preferred aspects of the invention are recited in dependent claims.

### Detailed Description

In the following description, the features of the invention will be described with reference to exemplary embodiments; however, any feature of the invention disclosed herein, may be combined with one or more other features here disclosed to provide further embodiments of the present invention. Such embodiments shall be considered as disclosed by the present application.

As above mentioned, an object of the present invention is an aqueous paste composition for textile coating, comprising:
- 1-60 parts by weight of at least one material having tensile modulus of at least 2000 MPa selected from polyvinylidene fluoride (PVDF) and a mixture of polyvinylidene fluoride (PVDF) glass fiber, wherein tensile modulus of PVDF is measured according to International Standards ISO 527-1 and ISO 527-2, and tensile modulus of glass fiber is measured according to ASTM C1557-14,
- 1-24 parts by weight of at least one antistatic agent,
- 16-60 parts by weight of at least one binder, and
- 50-200 parts by weight of water,
wherein said composition is substantially colourless, whereby, when applied to a coloured fabric, the coating does not substantially affect the colour of said fabric.

Advantageously, the aqueous paste composition of the invention allows for the production of textiles that are suitable to be used in the production of garments and motorcycle gears such as, for example, pants and jackets. In fact, it has been surprisingly observed that the aqueous paste composition of the invention imparts impact abrasion resistance properties to the textiles that have been treated with the composition, whilst maintaining the textiles soft and stylish.

According to embodiments, the composition comprises particles and/or short fibers obtained from at least one material having tensile modulus of at least 2000 MPa. In other words, according to embodiments, the material having tensile modulus of at least 2000 MPa in the composition may be in the form of particles and/or short fibers.

According to embodiments, particles and short fibers may have size in the range of, for example, from 0.1 µm to 10 µm, preferably from 0.5 µm to 5 µm, more preferably from 1 µm to 4 µm.

According to embodiments, the composition may contain 1-40 parts by weight, preferably 20-40 parts by weight of at least one material having tensile modulus of at least 2000 MPa.

According to embodiments, the material having tensile modulus of at least 2000 MPa is in powder form. In other words, according to embodiments, the composition comprises a powder obtained from at least one material having tensile modulus of at least 2000 MPa.

According to embodiments, the material having tensile modulus of at least 2000 MPa may be selected from polyvinylidene fluoride (PVDF) and a mixture of polyvinylidene fluoride (PVDF) glass fiber

For example, polyvinylidene fluoride (PVDF) suitable to be used in the present invention is the commercial product Kynar^{®} 761A.

The tensile modulus may be measured according to known methods. For example, tensile modulus of plastics, such as PVDF, is measured according to International Standards ISO 527-1 and ISO 527-2, while the tensile modulus of glass fiber is measured according to ASTM C1557-14.

According to embodiments, the at least one material having tensile modulus of at least 2000 MPa in the composition of the invention may be polyvinylidene fluoride (PVDF); in this case, the tensile modulus is measured according to ISO 527-1 and ISO 527-2.

According to embodiments, the at least one material having tensile modulus of at least 2000 MPa in the composition of the invention may be a mixture of polyvinylidene fluoride (PVDF) and glass fiber; the tensile modulus of glass fiber is measured according to ASTM C1557-14.

According to embodiments, the composition of the invention may contain 5-24 parts by weight, preferably 5-20 parts by weight of the at least one antistatic agent.

As used herein, the term "antistatic agent" refers to a compound that is suitable to be included into a mixture, such as an aqueous paste composition, in order to reduce or eliminate buildup of static electricity when the mixture is applied to a substrate, e.g. a textile.

According to embodiments, the antistatic agent may be selected from the group consisting of esters of phosphoric acid, polyethylene glycol esters, polyols, quaternary ammonium compounds, polysiloxane, polyol amine, polyvinyl chloride derivatives, heterocyclic additives, and mixture thereof.

For example, suitable heterocyclic additives are imidazolinium, pyridinium, piperidinium and morpholinium salts, and mixtures thereof.

According to embodiments, the composition of the invention may contain 16-50 parts by weight, preferably 20-50 parts by weight of the at least one binder. A used herein, the term "binder" refers to a compound that is used to bind together two or more other materials in a mixture, such as an aqueous paste composition, and contributes to the adhesion of the mixture to a substrate when the mixture is applied to said substrate, e.g., to a textile.

According to embodiments, the binder is a matrix-forming binder, e.g., a film-forming binder.

Preferably, the binder is a polymeric binder.

According to embodiments, the binder is selected from the group consisting of vinyl acetate, acrylic, styrene/acrylic, vinyl/verstate, vinyl/acrylic copolymers and mixtures thereof.

The composition of the invention may further comprise at least one wetting agent.

Preferably, said at least one wetting agent may be selected from the group consisting of anionic, cationic, nonionic, amphoteric wetting agents, and mixtures thereof.

Advantageously, when the composition comprises at least one wetting agent, the composition of the invention can be applied to a textile in a particularly easy way.

In embodiments, the composition of the invention includes at least one wetting agent in an amount of 0.1-10 parts by weight, preferably 1-10 parts by weight. According to embodiments, the aqueous paste composition of the invention may further comprise at least one antifoam agent. Preferably, the antifoam agent is in liquid form.

Advantageously, when the composition comprises at least one antifoam agent, the composition of the invention can be prepared and manipulated, e.g., during its preparation and/or during the application to a textile (e.g., a fabric) substantially reducing or substantially avoiding the formation of foam.

According to embodiments, when the composition contains at least one antifoam agent, the antifoam agent is preferably in an amount in the range of from 0.1 to 5 parts by weight, more preferably in an amount in the range of from 1 to 4 parts by weight.

According to embodiments, the antifoam agent is selected from the group consisting of alkyl poly acrylates, castor oil, fatty acids, fatty acids esters, fatty acids sulfate, fatty alcohol, fatty alcohol esters, fatty alcohol sulfate, foot olive oil, mono and di glyceride, paraffin oil, paraffin wax, poly propylene glycol, silicones oil, vegetable and animal fats, vegetable and animal fats sulfates, vegetable and animal oils, vegetable and animal oil sulfates, vegetable and animal wax, vegetable and animal wax sulfate.

According to embodiments, the substantially colourless composition of the present invention may comprise:
- 7,5%-15% by weight of at least one material, as disclosed above, having tensile modulus of at least 2000 MPa;
- 1,5%-2,5% by weight of at least one antistatic agent;
- 20%-30% by weight of at least one binder;
- 60%-70% by weight of water, and
- optionally, 2%-3% of at least one wetting agent;
- optionally, 0,1%-0,3% of at least one antifoam agent.

Amounts of the different components of the composition are advantageously selected in order to obtain 100% by weight, i.e. the final weight of the composition.

For example, embodiments of the composition having final weight 1000g, may comprise:
- 75g-150g of at least one material, as disclosed above, having tensile modulus of at least 2000 MPa;
- 15g-25g of at least one antistatic agent;
- 200g-300g of at least one binder;
- 600g-700g of water, and
- optionally, 20g-30g of at least one wetting agent;
- optionally, 1g-3g of at least one antifoam agent.

According to embodiments, the composition of the invention may include one or more thickeners.

Thickeners that are suitable to be included in aqueous paste coating compositions for fabrics are known in the art, and are commercially available; suitable thickeners are natural and synthetic thickeners such as e.g. alginates, guars and acrylic polymers and copolymers.

Advantageously, one or more thickeners may be included into the composition of the invention in order to adjust the viscosity of the coating paste composition. Preferably, the viscosity of the coating paste composition of the invention is between 15-30 dPas, preferably between 20-25 dPas, measured with HAAKE Viscotester^{®} 2 plus. The HAAKE Viscotester^{®} 2 plus is a rotational viscometer.

The composition of the invention is substantially colourless. In this case, advantageously, when the the composition is applied to a fabric or a garment, the coating does not substantially affect the colour of the fabric or garment which is applied to. For example, if the fabric coated with the composition is an indigo dyed fabric, the coating would not substantially affect the visual aestetical appearence of the indigo dyed fabric.

The composition of the invention may be produced through known methods. For example, it may be produced by mixing the different components. According to embodiments, the components may be provided and admixed together to obtain the composition of the invention.

According to embodiments, two or more components may be provided sequentially during the mixing.

For example, the process for producing the composition of the invention may comprise the following steps:
- providing 50-200 parts by weight of water; optionally adding 0.1-10 parts by weight of a wetting agent and mixing to obtain an homogeneous mixture;
- Adding 1-60 parts by weight of at least one material having tensile modulus of at least 2000 MPa (e.g., polyvinylidene fluoride (PDVF)) and mixing to obtain an homogeneous mixture;
- Adding 16-60 parts by weight of a binder, 1-24 parts by weight of an antistatic agent, and optionally 0.1 to 4 parts by weight of an antifoam agent, to the mixture and mixing to obtain an homogeneous mixture;
- Optionally adding a thickener in an amount suitable to obtain a composition having a suitable viscosity and mixing to obtain an homogeneous mixture.

The aqueous paste composition of the invention may be applied to a fabric through known coating methods, such as knife coating.

Knife coating is a method that is known in the art.

Preferably, the aqueous paste composition is applied to a fabric in an amount in the range of at least 1g per square meter of fabric, preferably from 35g to 100g per square meter of fabric, more preferably from 50g to 75g per square meter of fabric, even more preferably from 55g to 70g per square meter of fabric.

Preferably, the composition is applied to a fabric in an amount suitable to obtain on the fabric an amount of dry coating which is in the range of at least 1g per square meter of fabric, preferably from 10g to 40g per square meter of fabric, more preferably from 20g to 30g per square meter of fabric, even more preferably from 22g to 28g per square meter of fabric.

Advantageously, by varying the amount of paste composition applied to the fabric, the final thickness of the coating on the fabric may be varied.

In the present description, when reference is made to a fabric, this reference includes the fabric present in an article, especially a garment or clothing article, in particular articles that are suitable for production of motorcycle gears, such as, for example, pants and jackets.

According to embodiments of the invention, the fabric is preferably a woven fabric, and more preferably is a denim fabric.

For example, the fabric may be a double warp woven fabric or a standard woven fabric, such as a plain fabric, a twill fabric or a satin fabric.

According to embodiments, the woven fabric may be selected from double warp woven fabric and denim fabric.

According to embodiments, the fabric has a weight that is lower than 750 g/m², preferably lower than 600 g/m² , more preferably lower that 550 g/m².

According to embodiments, woven fabrics suitable to be used in the present invention have warp density in the range of from 10 to 150 ends/cm, preferably from 40 to 60 ends/cm.

According to embodiments, woven fabrics suitable to be used in the present invention have weft density in the range of from 5 to 50 ends/cm, preferably from 10 to 30 ends/cm.

Advantageously, woven fabrics suitable to be used in the present invention may have any combination of the warp density and weft density values, as above mentioned.

According to embodiments, the fabric may include natural yarns and/or synthetic yarn and/or mixed yarns. Additionally or alternatively, in embodiments, the fabric may include high strength performance yarns and/or fibers preferably selected from the group consisting of Kevlar^{®}, Dyneema^{®}, Spectra^{®}, Aramid, Ultra high molecular weight polyethylene, polybenzoxazole, polyarylate, carbon, polyolefin, and mixture thereof; more preferably selected from the group consisting of Kevlar^{®}, Dyneema^{®}, Spectra^{®}, and mixture thereof.

According to embodiments, the fabric may include one or more high strength performance yarns as well as one or more natural yarns and/or one or more synthetic yarns and/or one or more mixed yarns.

According to embodiments, the fabric includes at least 1% by weight, preferably at least 10%, more preferably at least 25% by weight, even more preferably at least 50% by weight of high strength performance yarns and/or fibers.

In the present description, natural yarns are yarns that include natural fibers, which may be selected from cotton, wool, flax, kenaf, ramie, hemp, linen and mixtures thereof.

In the present description, synthetic yarns are yarns that include synthetic fibers, which may be selected from polyester, rayon, nylon, lycra, elastane and mixtures thereof.

In the present description, mixed yarns are yarns that include both natural (e.g., cotton) and synthetic fibers.

According to embodiments, the fabric may include natural fibers, and/or synthetic fibers and/or high strength fibers.

For example, the fabric may include cotton fibers, elastane fibers and high strength fibers. Preferably, the fabric may include at least 1% by weight of high strength fibers, as above mentioned.

After the application of the composition of the invention on at least part of a fabric, preferably a denim, the fabric coated with the composition is dried in order to fix the coating to the fabric.

A further object of the invention is a process for producing a coated fabric, comprising the step of:
a) providing at least a fabric,
b) coating at least part of the fabric with an aqueous paste composition according to the invention, and
c) drying the fabric obtained in step b) to fix the coating to said fabric; said process further comprising a step d) wherein the fabric obtained in step c) undergoes mechanical stress to reduce the rigidity of said fabric; and wherein the dry coating on said fabric is colourless, whereby said coating does not substantially affect the colour of said fabric.

Independent process claim 10 makes reference to an aqueous paste composition according to any claim 1 to 9. Accordingly, independent process claim 10 is intended to refer to an aqueous paste composition having features according to any claim 1 to 9, and any combination thereof. In other words, the aqueous paste composition which step b) of claim 10 refers to may be any aqueous paste composition having features according to any claim 1 to 9, and any combination thereof.

According to the present invention, the coated fabric comprises a fabric and a coating.

As above mentioned, a suitable amount of paste composition may be applied to at least part of the fabric according to known methods, e.g., knife coating.

According to embodiments, step c) comprises a step of heating the fabric obtained in step b). In this case, according to embodiments, the heating of the fabric provided with the aqueous paste composition of the invention may be carried out at a temperature ranging from 100°C to 200°C, preferably from 130°C to 180°C. For example, the step of heating may be continued for a time ranging from 1 to 5 minutes, preferably from 2 to 4 minutes.

According to embodiments, the heating the fabric provided with the composition may be carried out stepwise.

Accordingly, according to embodiments, step c) of the process of the invention comprises a step of heating the fabric obtained in step b) at a first temperature and a step of heating the fabric at a second temperature. Preferably, said second temperature is higher than said first temperature.

For example, the fabric obtained in step b) of the process of the invention, i.e., a fabric that is at least in part coated with the aqueous paste composition of the invention, may be heated to a first temperature to dry the composition. Subsequently, the fabric coated with the dry composition may be heated at a second temperature, preferably higher than said first temperature, to fix the coating to the fabric.

For example, the fabric provided with the composition may be heated at a first temperature ranging from 100°C to 150°C, preferably from 120°C to 140°C, for a time ranging from 0,5 to 5 min, preferably from 1 to 3 min. In this way, advantageously, the composition is dried on the fabric.

Subsequently, the fabric coated with the dry composition may be heated at a second temperature ranging from 150°C to 200°C, preferably from 170°C to 190°C, for a time ranging from 0,2 min to 2 min, preferably from 0,5 min to 1,5 min. In this way, advantageously, the dried composition is fixed to the fabric.

The process further comprises a softening step d).

In softening step d) the coated fabric undergoes mechanical stress, so that the softness of the coated fabric increases. In this case, advantageously, the rigidity of the fabric is reduced.

Advantageously, it has been observed that, when the coated fabric undergoes mechanical stress, the rigidity of the fabric is reduced while impact abrasion resistance is maintained.

Methods to soften coated fabrics by applying one or more mechanical stresses are known in the art.

For example, a suitable softening method is ball washing. In this case, the coated fabric (or an article comprising it) is treated by washing, e.g., in a washing machine, in presence of hard elements (e.g., hard beads).

A further object of the invention is a coated fabric as obtainable through a process according to the invention, as above discussed.

According to an aspect, the coated fabric as obtainable through the process of the invention is a dry or substantially dry coated fabric.

In fact, advantageously, the step of drying the fabric provided with the composition of the invention, provides for the drying and fixing of the composition onto the fabric. In other words, the moisture (in particular, the water) in the composition is removed or substantially removed from the composition on the fabric during the drying step.

According to embodiments, the coating on the fabric is in the form of a matrix, e.g., a film.

For example, the coated fabric of the invention may comprise a dry or substantially dry colourless polymeric film including a binder, a material, as disclosed above, having tensile modulus of at least 2000 MPa, and an antistatic agent.

For example, after drying, the binder in the composition of the invention may form a matrix in the form of a film which includes the material, as disclosed above, having tensile modulus of at least 2000 MPa, for example, PVDF, and the antistatic agent.

The material having tensile modulus of at least 2000 MPa, and the antistatic agent in the dry coating on the fabric may be characterized according to known methods. For example, the high tensile modulus is formed of particles, the particles in the binder matrix may be identified with an optical microscope. For example, the material having tensile modulus of at least 2000 MPa (preferably, PVDF), and the antistatic agent may be extracted from the coated fabric, isolated and separated according to known methods. After separation and isolation, the material having tensile modulus of at least 2000 MPa, and the antistatic agent may be characterized through known methods, such as, for example, spectroscopic and chromatographic techniques. For example, FTIR (Fourier Transform Infrared), Raman, GPC (Gel Permeation chromatography) and HPLC (High Performance Liquid chromatography) may be used for characterization of the components of the coating of the fabric. Additionally, surface analysis may be carried out trough FT-IR in ATR (attenuated total reflectance) mode. The spectrum obtained from the not coated fabric may be subtracted from the spectrum obtained from the same fabric when coated, to obtain, as difference spectrum, the spectrum of the coating. In this way, advantageously, the components of the coating, in particular the material having tensile modulus of at least 2000 MPa (e.g., PVDF or a mixture of polyvinylidene fluoride (PVDF) and glass fiber), may be identified.

As above mentioned, according to embodiments, after drying, the binder forms a matrix. In this case, such matrix can be degraded according to known methods, so that small parts of it could be detected and characterized through known techniques.

For example, suitable solvents may be used to extract, for example, the material having tensile modulus of at least 2000 MPa (e.g., PVDF or a mixture of polyvinylidene fluoride (PVDF) and glass fiber) from the coating, e.g., by dissolving the matrix formed by the binder. The extracted material may be analyzed through, for example, spectroscopic and/or chromatographic techniques to identify the material having tensile modulus of at least 2000 MPa used in the coating.

For example, qualitative analysis may be conducted in order to identify the material having tensile modulus of at least 2000 MPa (e.g., PVDF or a mixture of polyvinylidene fluoride (PVDF) and glass fiber) in the dry coating on the textile substrate through one or more of the following methods which are, per se, known in the art:
Non-Destructive Methods (i.e., disruption of the dry coating not required)
   - XRD (X-ray Diffraction), (Direct analysis)
   - Solid-state NMR (Nuclear Magnetic resonance)
   - FTIR (Fourier Transform Infrared Spectroscopy)
   - Raman Spectroscopy
Destructive Methods (i.e., disruption of the dry coating required)
   - NMR (¹⁹F-NMR)
   - Viscosity measurement (after extraction)
   - XRD (X-ray Diffraction), (after extraction)
   - Beilstein halogen test
   - Raman Spectroscopy (after extraction)

According to embodiments, the material having tensile modulus of at least 2000 MPa, e.g., PVDF or a mixture of polyvinylidene fluoride (PVDF) and glass fiber, may be present in the dry coating on the fabric as a powder, i.e. as particles; the particles preferably are micron particles e.g. with size in the range of 1 to 10 microns. The material may also be present a short fibers, e.g. fibers of a length short enough to avoid jeopardizing the final aspect of the fabric. A possible length of the fibers may be less than 5 mm, preferably less than 2 mm. In a final product in which the high tensile modulus is a thermoplastic material (e.g. PVDF) at least some of the particles of thermoplastic material may be in a coalesced for, or aggregated, form, possibly due to the heating and setting step. The area of aggregated particles may have different dimensions and may provide portions of a film.

The above mentioned techniques, suitable to characterize the dry coating on the fabric, are known in the art.

According to embodiments, the fabric is coated with the dry coating in an amount in the range of from 10g to 40g per square meter of fabric, preferably from 20g to 30g per square meter of fabric, more preferably from 22g to 28g per square meter of fabric.

According to embodiments, the coated fabric namely, the dry coating of the fabric, comprises from 24% to 38% by weight of a material having tensile modulus of at least 2000 MPa, from 48% to 75% by weight of a binder, and 5,5% to 8,5% by weight of an antistatic agent. Preferably, the dry coating of the fabric, comprises from 28% to 34% by weight of a material having tensile modulus of at least 2000 MPa, from 55% to 70% by weight of a binder, and 6% to 8% by weight of an antistatic agent. More preferably, the dry coating of the fabric, comprises from 30% to 32% by weight of a material having tensile modulus of at least 2000 MPa, from 60% to 65% by weight of a binder, and 6% to 8% by weight of an antistatic agent.

For example, the coating of the fabric may comprise about 31% by weight of PVDF, about 62% by weight of a binder and about 7% by weight of an antistatic agent.

In embodiments, advantageously, that coated fabric of the invention has an impact abrasion resistance that may be up to 8 s, wherein impact abrasion resistance being measured according to EN 13595-2.

In embodiments, advantageously, the coated fabric of the invention has an impact abrasion resistance of at least 3.5 s, preferably at least 4.5 s, more preferably at least 5.5 s, and even more preferably up to 8 s, wherein impact abrasion resistance being measured according to EN 13595-2.

According to embodiments, the coated fabric of the invention has an impact abrasion resistance that is at least 1.5 times, and up to 10 times the impact abrasion resistance of the fabric before the coating.

As above mentioned, the coated fabric of the present invention, i.e., a dry or substantially dry coated fabric according to the invention is suitable for the production of motorcycle gears, in particular motorcycle clothing articles, e.g., pants and jackets. Such motorcycle clothing articles, advantageously, have an appearance such that they may also be used in daily life.

As above mentioned, according to embodiments, the fabric may include one or more high strength performance yarns as well as one or more natural yarns and/or one or more synthetic yarns and/or one or more mixed yarns.

According to embodiments, the fabric includes at least 1% by weight, preferably at least 10%, more preferably at least 25% by weight, even more preferably at least 50% by weight of high strength performance yarns and/or fibers.

Still a further object of the invention is a garment comprising a coated fabric according to the invention.

According to an advantageous aspect of the present invention, the composition of the invention is applied to the side of the fabric which is the side of the fabric that is visible when a clothing article of garment comprising the coated fabric is worn.

In other words, the coating composition of the invention is advantageously applied on the side of a garment exposed to the outside environment.

The dry coating on the fabric or garment is colourless or substantially colourless, so that the coating does not substantially affect the colour of the fabric or garment which is applied to. For example, if the fabric coated with the composition is an indigo dyed fabric, the coating would not affect the visual aestetical appearence of the indigo dyed fabric.

Advantageously, the fabric coated with the paste composition of the invention is provided with impact abrasion resistance, and it is also soft, stylish and low weight as well.

Another advantage of the present invention is that, through the process of the invention a coated fabric, and articles comprising it, having impact abrasion resistance properties can be manufactured in a fast, easy a cost efficient way.

### Experimental Section

### Example 1 - production of the aqueous paste composition of the invention

An exemplary embodiment of the composition of the invention may be produced as follows:
- Mixing 50-200 parts by weight of water with 0.1-10 parts by weight of a wetting agent, to obtain an homogeneous mixture;
- Adding 1-60 parts by weight of polyvinylidene fluoride (PDVF) to the mixture and mixing to obtain an homogeneous mixture;
- Adding 16-60 parts by weight of a binder, 1-24 parts by weight of an antistatic agent and 0.1 to 4 parts by weight of an antifoam agent to the mixture and mixing to obtain an homogeneous mixture;
- Adding a thickener in an amount suitable to obtain a composition having a suitable viscosity and mixing to obtain an homogeneous mixture.

### Example 2 - production of a coated fabric according to the invention

An exemplary embodiment of the coated fabric of the invention may be produced as follows:
- Applying the aqueous paste composition produced in Example 1 to a woven fabric (e.g., a denim fabric) with in an amount ranging from 35g to 100g per square meter of fabric through knife coating;
- Heating at 130°C for 2 min to dry the composition;
- Heating at 180°C for 1 min to fix the coating to the fabric;
- Washing the coated fabric in a washing machine in presence of hard elements (ball washing).

### Example 3 - Measurement of impact abrasion resistance

A sample of a double warp woven fabric containing 73,15% by weight Kevlar^{®} fibers and 26,85% by weight cotton fibers, having weight 538,33 g/m², and having warp density of 58,6 ends/cm and weft density of 17 ends/cm, was treated with the composition of the invention to obtain a coated (dry) fabric wherein the coating had the following composition:about 31% by weight of PVDF, about 62% by weight of binder (in the form of a polymeric matrix) and about 7% by weight of anti-static agent.

The impact abrasion resistance of the coated fabric was tested.

Another sample of the above mentioned fabric was not coated and its impact abrasion resistance was tested as control.

The testing of impact abrasion resistance was carried out according to **EN** 13595-2.

The control, not coated, fabric sample showed an impact abrasion resistance of 2,54 s, while the coated sample showed an impact abrasion resistance of 6,33 s.

In other words, the coated fabric sample showed an impact abrasion resistance which is about 2,5 times higher with respect to the not coated fabric sample.

## Claims

1. An aqueous paste composition for textile coating, comprising:
• 1-60 parts by weight of at least one material having tensile modulus of at least 2000 MPa selected from polyvinylidene fluoride (PVDF) and a mixture of polyvinylidene fluoride (PVDF) and glass fiber, wherein tensile modulus of PVDF is measured according to International Standards ISO 527-1 and ISO 527-2, and tensile modulus of glass fiber is measured according to ASTM C1557-14,
• 1-24 parts by weight of at least one antistatic agent,
• 16-60 parts by weight of at least one binder,
• 50-200 parts by weight of water,
wherein said composition is substantially colourless, whereby, when applied to a coloured fabric, the coating does not substantially affect the colour of said fabric.

2. The composition according to claim 1, comprising particles and/or short fibers of said at least one material having tensile modulus of at least 2000 MPa.

3. The composition according to claim 1 or 2, containing 1-40 parts by weight, preferably 20-40 parts by weight of said at least one material having tensile modulus of at least 2000 MPa.

4. The composition according to any claim 1 to 3, wherein said at least one material having tensile modulus of at least 2000 MPa is at least in part in powder form.

5. The composition according to any claim 1 to 4, wherein said at least one material having tensile modulus of at least 2000 MPa is polyvinylidene fluoride (PVDF), said tensile modulus being measured according to ISO 527-1 and ISO 527-2.

6. The composition according to any previous claim, containing 5-24 parts by weight, preferably 5-20 parts by weight of said at least one antistatic agent wherein said at least one antistatic agent is preferably selected from the group consisting of esters of phosphoric acid, polyethylene glycol esters, polyols, quaternary ammonium compounds, polysiloxane, polyol amine, polyvinyl chloride derivatives, heterocyclic additives and mixtures thereof.

7. The composition according to any previous claim, containing 16-50 parts by weight, preferably 20-50 parts by weight of said at least one binder, wherein said at least one binder is preferably selected from the group consisting of vinyl acetate, acrylic, styrene/acrylic, vinyl/verstate, vinyl/acrylic copolymers and mixtures thereof.

8. The composition according to any previous claim, further comprising at least one wetting agent, preferably in an amount in the range of from 0.1 to 10 parts by weight, more preferably of from 1 to 10 parts by weight, wherein said wetting agent is preferably selected from the group consisting of anionic, cationic, nonionic, amphoteric wetting agents, and mixtures thereof.

9. The composition according to any previous claim, further comprising at least one antifoam agent, preferably in an amount in the range of from 0.1 to 5 parts by weight, more preferably in an amount in the range of from 1 to 4 parts by weight.

10. A process for producing a coated fabric, comprising the step of:
a) Providing at least a fabric,
b) Coating at least part of said fabric with an aqueous paste composition according to any claim 1-9,
c) Drying the fabric obtained in step b) to fix said coating to said fabric;
said process further comprising a step d) wherein the fabric obtained in step c) undergoes mechanical stress to reduce the rigidity of said fabric; and wherein the dry coating on said fabric is colourless, whereby said coating does not substantially affect the colour of said fabric.

11. The process according to claim 10, wherein said step c) comprises heating the fabric obtained in step b), preferably heating said fabric at a first temperature and then at a second temperature, wherein said second temperature is preferably higher than said first temperature.

12. The process according to claim 10 or 11, wherein said step b) comprises applying said aqueous paste composition in an amount of at least 1g per square meter of fabric, preferably in the range of from 35g to 100g per square meter of fabric, more preferably from 50g to 75g per square meter of fabric, even more preferably from 55g to 70g per square meter of fabric.

13. The process according to claim 10, wherein said mechanical stress is provided to said fabric by washing said fabric obtained in step c) in presence of hard elements.

14. A coated fabric comprising a fabric and a coating, as obtainable through a process according to any previous claim 10 to 13, wherein the dry coating on said fabric is colourless, whereby said coating does not substantially affect the colour of said fabric.

15. The coated fabric according to claim 14, wherein said coating is an amount of at least 0.5g per square meter of fabric, preferably in the range of from 10g to 40g per square meter of fabric, preferably from 20g to 30g per square meter of fabric, more preferably from 22g to 28g per square meter of fabric.

16. The coated fabric according to claim 14 or 15, wherein said coating comprises: from 24% to 38%, preferably from 28% to 34%, more preferably from 30% to 32% by weight of a material having tensile modulus of at least 2000 MPa, from 48% to 75%, preferably from 55% to 70%, more preferably 60% to 65% by weight of a binder, and from 5,5% to 8,5%, preferably 6% to 8% by weight of an antistatic agent.

17. The coated fabric according to any claim 14 to 16, wherein said fabric includes at least 1% by weight, preferably at least 10%, more preferably at least 25% by weight, even more preferably at least 50% by weight of high strength performance yarns and/or fibers, wherein the material for said high strength performance yarns and/or fibers is preferably selected from the group consisting of Kevlar^{®}, Dyneema^{®}, Spectra^{®}, Aramid, Ultra High Molecular Weight Polyethylene, polybenzoxazole, polyarylate, carbon, polyolefin, and mixture thereof.

18. The coated fabric according to any claim 14 to 17, wherein said coated fabric has an impact abrasion resistance of at least 3.5 s, preferably at least 4.5 s, more preferably at least 5.5 s, said impact abrasion resistance being measured according to EN 13595-2.

19. A garment comprising a coated fabric according to any claim 14 to 18.

## Patentansprüche

1. Wässrige Pastenzusammensetzung zur Textilbeschichtung, umfassend:
- 1 bis 60 Gewichtsteile mindestens eines Materials mit einem Zugmodul von mindestens 2000 MPa, ausgewählt aus Polyvinylidenfluorid (PVDF) und einer Mischung aus Polyvinylidenfluorid (PVDF) und Glasfaser, wobei das Zugmodul von PVDF gemäß den internationalen Normen ISO 527-1 und ISO 527-2 gemessen wird und das Zugmodul der Glasfaser gemäß ASTM C1557-14 gemessen wird,
- 1 bis 24 Gewichtsteile mindestens eines Antistatikmittels,
- 16 bis 60 Gewichtsteile mindestens eines Bindemittels,
- 50 bis 200 Gewichtsteile Wasser,
wobei die Zusammensetzung im Wesentlichen farblos ist, wodurch die Beschichtung, wenn sie auf ein gefärbtes Gewebe aufgebracht wird, die Farbe des Gewebes im Wesentlichen nicht beeinträchtigt.

2. Zusammensetzung nach Anspruch 1, umfassend Partikel und/oder Kurzfasern des mindestens einen Materials mit einem Zugmodul von mindestens 2000 MPa.

3. Zusammensetzung nach Anspruch 1 oder 2, enthaltend 1 bis 40 Gewichtsteile, vorzugsweise 20 bis 40 Gewichtsteile des mindestens einen Materials mit einem Zugmodul von mindestens 2000 MPa.

4. Zusammensetzung nach einem der Ansprüche 1 bis 3, wobei das mindestens eine Material mit einem Zugmodul von mindestens 2000 MPa zumindest teilweise in Pulverform vorliegt.

5. Zusammensetzung nach einem der Ansprüche 1 bis 4, wobei das mindestens eine Material mit einem Zugmodul von mindestens 2000 MPa Polyvinylidenfluorid (PVDF) ist, wobei das Zugmodul gemäß ISO 527-1 und ISO 527-2 gemessen wird.

6. Zusammensetzung nach einem der vorhergehenden Ansprüche, enthaltend 5 bis 24 Gewichtsteile, vorzugsweise 5 bis 20 Gewichtsteile des mindestens einen Antistatikmittels, wobei das mindestens eine Antistatikmittel vorzugsweise ausgewählt ist aus der Gruppe bestehend aus Estern der Phosphorsäure, Polyethylenglykolestern, Polyolen, quartären Ammoniumverbindungen, Polysiloxan, Polyolamin, Polyvinylchlorid-Derivaten, heterocyclischen Additiven und Mischungen davon.

7. Zusammensetzung nach einem der vorhergehenden Ansprüche, enthaltend 16 bis 50 Gewichtsteile, vorzugsweise 20 bis 50 Gewichtsteile des mindestens einen Bindemittels, wobei das mindestens eine Bindemittel vorzugsweise ausgewählt ist aus der Gruppe bestehend aus Vinylacetat-, Acryl-, Styrol/Acryl-, Vinyl/Versatat- und Vinyl/Acryl-Copolymeren und Mischungen davon.

8. Zusammensetzung nach einem der vorhergehenden Ansprüche, ferner umfassend mindestens ein Netzmittel, vorzugsweise in einer Menge im Bereich von 0,1 bis 10 Gewichtsteilen, weiter bevorzugt von 1 bis 10 Gewichtsteilen, wobei das Netzmittel vorzugsweise ausgewählt ist aus der Gruppe bestehend aus anionischen, kationischen, nichtionischen und amphoteren Netzmitteln sowie Mischungen davon.

9. Zusammensetzung nach einem der vorhergehenden Ansprüche, ferner umfassend mindestens einen Entschäumer, vorzugsweise in einer Menge im Bereich von 0,1 bis 5 Gewichtsteilen, weiter bevorzugt in einer Menge im Bereich von 1 bis 4 Gewichtsteilen.

10. Verfahren zur Herstellung eines beschichteten Gewebes, umfassend den Schritt:
a) Bereitstellen mindestens eines Gewebes,
b) Beschichten mindestens eines Teils des Gewebes mit einer wässrigen Pastenzusammensetzung nach einem der Ansprüche 1 bis 9,
c) Trocknen des in Schritt b) erhaltenen Gewebes, um die Beschichtung auf dem Gewebe zu fixieren;
wobei das Verfahren ferner einen Schritt d) umfasst, in dem das in Schritt c) erhaltene Gewebe einer mechanischen Beanspruchung unterzogen wird, um die Steifigkeit des Gewebes zu verringern; und wobei die trockene Beschichtung auf dem Gewebe farblos ist, wodurch die Beschichtung die Farbe des Gewebes im Wesentlichen nicht beeinträchtigt.

11. Verfahren nach Anspruch 10, wobei der Schritt c) das Erwärmen des in Schritt b) erhaltenen Gewebes umfasst, vorzugsweise das Erwärmen des Gewebes bei einer ersten Temperatur und anschließend bei einer zweiten Temperatur, wobei die zweite Temperatur vorzugsweise höher ist als die erste Temperatur.

12. Verfahren nach Anspruch 10 oder 11, wobei der Schritt b) das Aufbringen der wässrigen Pastenzusammensetzung in einer Menge von mindestens 1 g pro Quadratmeter Gewebe umfasst, vorzugsweise im Bereich von 35 g bis 100 g pro Quadratmeter Gewebe, weiter bevorzugt von 50 g bis 75 g pro Quadratmeter Gewebe, noch weiter bevorzugt von 55 g bis 70 g pro Quadratmeter Gewebe.

13. Verfahren nach Anspruch 10, wobei die mechanische Beanspruchung auf das Gewebe durch Waschen des in Schritt c) erhaltenen Gewebes in Gegenwart von harten Elementen aufgebracht wird.

14. Beschichtetes Gewebe, umfassend ein Gewebe und eine Beschichtung, erhältlich durch ein Verfahren nach einem der vorhergehenden Ansprüche 10 bis 13, wobei die trockene Beschichtung auf dem Gewebe farblos ist, wodurch die Beschichtung die Farbe des Gewebes im Wesentlichen nicht beeinträchtigt.

15. Beschichtetes Gewebe nach Anspruch 14, wobei die Beschichtung in einer Menge von mindestens 0,5 g pro Quadratmeter Gewebe vorliegt, vorzugsweise im Bereich von 10 g bis 40 g pro Quadratmeter Gewebe, vorzugsweise von 20 g bis 30 g pro Quadratmeter Gewebe, weiter bevorzugt von 22 g bis 28 g pro Quadratmeter Gewebe.

16. Beschichtetes Gewebe nach Anspruch 14 oder 15, wobei die Beschichtung umfasst: 24 bis 38 Gew.-%, vorzugsweise 28 bis 34 Gew.-%, weiter bevorzugt 30 bis 32 Gew.-% eines Materials mit einem Zugmodul von mindestens 2000 MPa, 48 bis 75 Gew.-%, vorzugsweise 55 bis 70 Gew.-%, weiter bevorzugt 60 bis 65 Gew.-% eines Bindemittels und 5,5 bis 8,5 Gew.-%, vorzugsweise 6 bis 8 Gew.-% eines Antistatikmittels.

17. Beschichtetes Gewebe nach einem der Ansprüche 14 bis 16, wobei das Gewebe mindestens 1 Gew.-%, vorzugsweise mindestens 10 Gew.-%, weiter bevorzugt mindestens 25 Gew.-%, noch weiter bevorzugt mindestens 50 Gew.-% an hochfesten Hochleistungsgarnen und/oder -fasern enthält, wobei das Material für die hochfesten Hochleistungsgarne und/oder -fasern vorzugsweise ausgewählt ist aus der Gruppe bestehend aus Kevlar^{®}, Dyneema^{®}, Spectra^{®}, Aramid, ultrahochmolekularem Polyethylen, Polybenzoxazol, Polyarylat, Kohlenstoff, Polyolefin und Mischungen davon.

18. Beschichtetes Gewebe nach einem der Ansprüche 14 bis 17, wobei das beschichtete Gewebe eine Aufprall-Abriebfestigkeit von mindestens 3,5 s, vorzugsweise von mindestens 4,5 s, weiter bevorzugt von mindestens 5,5 s aufweist, wobei die Aufprall-Abriebfestigkeit gemäß EN 13595-2 gemessen wird.

19. Kleidungsstück, umfassend ein beschichtetes Gewebe nach einem der Ansprüche 14 bis 18.

## Revendications

1. Composition de pâte aqueuse pour revêtement de textile, comprenant :
• 1 à 60 parties en poids d'au moins un matériau présentant un module de traction d'au moins 2 000 MPa, choisi parmi le polyfluorure de vinylidène (PVDF) et un mélange de polyfluorure de vinylidène (PVDF) et de fibre de verre, dans laquelle le module de traction du PVDF est mesuré conformément aux normes internationales ISO 527-1 et ISO 527-2, et le module de traction de la fibre de verre est mesuré conformément à la norme ASTM C1557-14,
• 1 à 24 parties en poids d'au moins un agent antistatique,
• 16 à 60 parties en poids d'au moins un liant,
• 50 à 200 parties en poids d'eau,
dans laquelle ladite composition est sensiblement incolore, de sorte que, lorsqu'elle est appliquée sur un tissu coloré, le revêtement n'altère pas sensiblement la couleur dudit tissu.

2. Composition selon la revendication 1, comprenant des particules et/ou des fibres courtes dudit au moins un matériau présentant un module de traction d'au moins 2 000 MPa.

3. Composition selon la revendication 1 ou 2, contenant 1 à 40 parties en poids, de préférence 20 à 40 parties en poids, dudit au moins un matériau présentant un module de traction d'au moins 2 000 MPa.

4. Composition selon l'une quelconque des revendications 1 à 3, dans laquelle ledit au moins un matériau présentant un module de traction d'au moins 2 000 MPa se présente, au moins en partie, sous forme de poudre.

5. Composition selon l'une quelconque des revendications 1 à 4, dans laquelle ledit au moins un matériau présentant un module de traction d'au moins 2 000 MPa est du polyfluorure de vinylidène (PVDF), ledit module de traction étant mesuré conformément aux normes ISO 527-1 et ISO 527-2.

6. Composition selon l'une quelconque des revendications précédentes, contenant 5 à 24 parties en poids, de préférence 5 à 20 parties en poids, dudit au moins un agent antistatique, dans laquelle ledit au moins un agent antistatique est de préférence choisi parmi le groupe constitué des esters d'acide phosphorique, des esters de polyéthylène glycol, des polyols, des composés d'ammonium quaternaire, du polysiloxane, des polyolamines, des dérivés de chlorure de polyvinyle, des additifs hétérocycliques et de leurs mélanges.

7. Composition selon l'une quelconque des revendications précédentes, contenant 16 à 50 parties en poids, de préférence 20 à 50 parties en poids, dudit au moins un liant, dans laquelle ledit au moins un liant est de préférence choisi parmi le groupe constitué de l'acétate de vinyle, de l'acrylique, du styrène/acrylique, du vinyle/vérate, des copolymères vinyle/acrylique et de leurs mélanges.

8. Composition selon l'une quelconque des revendications précédentes, comprenant en outre au moins un agent mouillant, de préférence en une quantité comprise entre 0,1 et 10 parties en poids, de préférence encore entre 1 et 10 parties en poids, dans laquelle ledit agent mouillant est de préférence choisi parmi le groupe constitué d'agents mouillants anioniques, cationiques, non ioniques, amphotères et de leurs mélanges.

9. Composition selon l'une quelconque des revendications précédentes, comprenant en outre au moins un agent antimousse, de préférence en une quantité comprise entre 0,1 et 5 parties en poids, de préférence encore en une quantité comprise entre 1 et 4 parties en poids.

10. Procédé de fabrication d'un tissu revêtu, comprenant l'étape consistant à :
a) fournir au moins un tissu,
b) revêtir au moins une partie dudit tissu d'une composition de pâte aqueuse selon l'une quelconque des revendications 1 à 9,
c) sécher le tissu obtenu à l'étape b) pour fixer ledit revêtement audit tissu ;
ledit procédé comprenant en outre une étape d) où le tissu obtenu à l'étape c) est soumis à une contrainte mécanique afin de réduire la rigidité dudit tissu ; et dans lequel le revêtement sec sur ledit tissu est incolore, de sorte que ledit revêtement n'affecte pas sensiblement la couleur dudit tissu.

11. Procédé selon la revendication 10, dans lequel ladite étape c) comprend le chauffage du tissu obtenu à l'étape b), de préférence le chauffage dudit tissu à une première température puis à une deuxième température, dans lequel ladite deuxième température est de préférence supérieure à ladite première température.

12. Procédé selon la revendication 10 ou 11, dans lequel ladite étape b) comprend l'application de ladite composition de pâte aqueuse en une quantité d'au moins 1 g par mètre carré de tissu, de préférence comprise entre 35 g et 100 g par mètre carré de tissu, plus préférablement entre 50 g et 75 g par mètre carré de tissu, et encore plus préférablement entre 55 g et 70 g par mètre carré de tissu.

13. Procédé selon la revendication 10, dans lequel ladite contrainte mécanique est appliquée audit tissu par lavage dudit tissu obtenu à l'étape c) en présence d'éléments durs.

14. Tissu revêtu comprenant un tissu et un revêtement, tel qu'il peut être obtenu par un procédé selon l'une quelconque des revendications 10 à 13 précédentes, dans lequel le revêtement sec sur ledit tissu est incolore, de sorte que ledit revêtement n'affecte pas de manière substantielle la couleur dudit tissu.

15. Tissu revêtu selon la revendication 14, dans lequel ledit revêtement est présent en une quantité d'au moins 0,5 g par mètre carré de tissu, de préférence comprise entre 10 g et 40 g par mètre carré de tissu, de préférence entre 20 g et 30 g par mètre carré de tissu, et plus préférablement entre 22 g et 28 g par mètre carré de tissu.

16. Tissu revêtu selon la revendication 14 ou 15, dans lequel ledit revêtement comprend : de 24 % à 38 %, de préférence de 28 % à 34 %, plus préférablement de 30 % à 32 % en poids d'un matériau présentant un module de traction d'au moins 2 000 MPa, de 48 % à 75 %, de préférence de 55 % à 70 %, de préférence encore de 60 % à 65 % en poids d'un liant, et de 5,5 % à 8,5 %, de préférence de 6 % à 8 % en poids d'un agent antistatique.

17. Tissu revêtu selon l'une quelconque des revendications 14 à 16, dans lequel ledit tissu comprend au moins 1 % en poids, de préférence au moins 10 %, de préférence encore au moins 25 % en poids, et de préférence encore au moins 50 % en poids de fils et/ou de fibres à haute résistance, où le matériau desdits fils et/ou fibres à haute résistance étant de préférence choisi parmi le groupe constitué du Kevlar^{®}, Dyneema^{®}, Spectra^{®}, l'aramide, le polyéthylène à poids moléculaire ultra élevé, le polybenzoxazole, le polyarylate, le carbone, la polyoléfine et leurs mélanges.

18. Tissu revêtu selon l'une quelconque des revendications 14 à 17, dans lequel ledit tissu revêtu présente une résistance à l'abrasion par impact d'au moins 3,5 s, de préférence d'au moins 4,5 s, de manière encore plus préférable d'au moins 5,5 s, ladite résistance à l'abrasion par impact étant mesurée conformément à la norme EN 13595-2.

19. Vêtement comprenant un tissu revêtu selon l'une quelconque des revendications 14 à 18.
